Europäisches Patentamt

**European Patent Office**

Office européen des brevets

(19)

(11) Veröffentlichungsnummer: **0 081 158**
**B1**

(12) **EUROPÄISCHE PATENTSCHRIFT**

(45) Veröffentlichungstag der Patentschrift:
08.05.85

(51) Int. Cl.⁴: **C 09 B 5/28, C 09 B 1/48**

(21) Anmeldenummer: **82110925.3**

(22) Anmeldetag: **26.11.82**

(54) Verfahren zur Herstellung eines Anthrachinonküpenfarbstoffs.

(30) Priorität: **09.12.81 DE 3148694**

(43) Veröffentlichungstag der Anmeldung:
**15.06.83 Patentblatt 83/24**

(45) Bekanntmachung des Hinweises auf die Patenterteilung:
**08.05.85 Patentblatt 85/19**

(84) Benannte Vertragsstaaten:
**CH DE FR GB LI**

(56) Entgegenhaltungen:
**CH - A - 131 593**
**DE - B - 1 085 991**
**US - A - 1 994 622**

**CHEMISCHES ZENTRALBLATT, Nr. 17, 23. April 1969, Seiten 193-194, Verlag Chemie, Weinheim, DE. J. DVORAK et al.: "Carbazolfarbstoffe"**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Kirsten, Rolf, Dr., Boberstrasse 13, D-5090 Leverkusen (DE)**
Erfinder: **Wunderlich, Klaus, Dr., Carl-Rumpff-Strasse 21, D-5090 Leverkusen (DE)**
Erfinder: **Hohmann, Walter, Dr., Fontanestrasse 17, D-5090 Leverkusen (DE)**

BUNDESDRUCKEREI BERLIN

**Beschreibung**

Die Erfindung betrifft ein neues Verfahren zur Herstellung eines hochechten grauen Anthrachinonküpenfarbstoffs.

Das neue Verfahren zur Herstellung eines Anthrachinonküpenfarbstoffs durch Umsetzung von 1-Aminoanthrachinon in schwefelsaurem Medium mit oxidierend wirkenden Mitteln zu Aminopolyanthrimiden und Carbazolierung der Aminopolyanthrimide in Gegenwart eines tertiären organischen Amins mit AlCl₃ ist dadurch gekennzeichnet, daß man pro Gewichtsteil Aminopolyanthrimid etwa 0,5 bis etwa 3 Gewichtsteile AlCl₃, vorzugsweise 0,7 — 1,5 Gewichtsteile, besonders bevorzugt 0,8 bis 1 Gewichtsteil und etwa 2 bis etwa 6 Gewichtsteile eines tertiären organischen Amins einsetzt.

Die Oxidation von 1-Aminoanthrachinon zu den Aminopolyanthrimiden wird vorzugsweise mit Peroxodisulfaten durchgeführt. Vorzugsweise verwendet man dabei pro Gewichtsteil 1-Aminoanthrachinon 6 — 12 Gewichtsteile, besonders bevorzugt 8 — 10 Gewichtsteile 30 — 50%ige Schwefelsäure. Für die Oxidationsreaktion ist es vorteilhaft, eine möglichst gute Feinverteilung des 1-Aminoanthrachinons in der Suspension zu erzielen.

Als tertiäre organische Amine können z. B. Pyridin, Picolin, Lutidin, Chinolin oder andere cyclische organische Stickstoffbasen eingesetzt werden. Bevorzugt ist Pyridin.

Die Carbazolierung wird bevorzugt bei Temperaturen zwischen etwa 100 und etwa 140° C, insbesondere bei 115 — 135° C durchgeführt.

Daß man durch Oxidation von 1-Aminoanthrachinon in Schwefelsäure zu Aminopolyanthrimiden und durch deren Behandlung mit Aluminiumchlorid- Pyridin zu grauen Küpenfarbstoffen gelangen kann, ist an sich bekannt. In der DE-B-1 077 352 wird die Oxidation mit Schwermetallsalzen beschrieben, während nach den Angaben der DE-B-1 085 991 Persulfat oder Chlorat eingesetzt werden. In beiden Fällen werden graue Farbstoffe durch Aluminiumchlorid-Pyridin-Behandlung erhalten. Nach dem erfindungsgemäßen Verfahren wird es möglich, im Gegensatz zu den genannten Verfahren eine sehr konzentrierte schwefelsaure Lösung von 1-Aminoanthrachinon in wenig Wasser zu verpasten, so daß eine Suspension mit einem hohen Gehalt an 1-Aminoanthrachinon entsteht. Es gelingt, die Oxidation mit Persulfat in kürzerer Zeit zu Ende zu bringen und eine deutlich höhere Ausbeute zu erzielen, als das nach dem Stand der Technik der Fall ist. Weiterhin wird durch die Anwendung einer wesentlich geringeren Menge an Schwefelsäure und durch die Vermeidung von Schwermetalloxiden die Ökologiebelastung des Abwassers gesenkt.

Auch die gemäß dem erfindungsgemäßen Verfahren möglichen niedrigen Carbazolierungstemperaturen von 100 — 140° C, bevorzugt 115 — 135° C wirken sich günstig auf die Qualität und die Farbausbeute der erhaltenen Küpenfarbstoffe aus. So sind die Echtheiten höher als bei den nach dem Verfahren der DE-B-1 077 352 erhaltenen Produkten, die durch Carbazolierung bei Temperaturen > 160° C erhalten werden. Verglichen mit dem Stand der Technik arbeitet man beim erfindungsgemäßen Verfahren auch mit geringeren Mengen an AlCl₃ und tertiärem organischen Amin.

Die an sich schon sehr guten Echtheiten der so erhaltenen Farbstoffe lassen sich noch weiter verbessern, indem man die Farbstoffe mit Oxidationsmitteln wie z. B. Chlorlauge, Chlorat, Chromat und ähnlichen Sauerstoff-abgebenden Mitteln behandelt.

Die geänderten Maßnahmen beim vorliegenden Verfahren führen dazu, daß man echtere Farbstoffe in höheren Ausbeuten erhält, als dies nach dem Stand der Technik der Fall ist. Die langen Reaktionszeiten und die hohen Carbazolierungstemperaturen, die nach dem Stand der Technik angewendet werden, wirken sich offensichtlich nachteilig auf die Farbstoffqualität aus. Auch die höheren Raum-Zeit-Ausbeuten und die geringere Ökologiebelastung des erfindungsgemäßen Verfahrens bedeuten Vorteile gegenüber den bekannten Verfahren.

Beispiel 1

182 g 1-Aminoanthrachinon werden in 624 g 96%iger Schwefelsäure gelöst. Diese Lösung läßt man schnell und unter intensivem Rühren in 936 ml Wasser einfließen. Zu der auf 25° C abgekühlten Suspension gibt man im Abstand von je 2¹/₂ Stunden 3mal jeweils 112 g Kaliumperoxidsulfat und rührt nach 3 Stunden bei ca. 25° C nach. Die Gesamtrührzeit beträgt 8 Stunden. Das schwarze, feinkristalline Aminopolyanthrimidgemisch wird abgesaugt, mit Wasser neutral gewaschen und getrocknet. Erhalten werden 180 g entsprechend 99% des Einsatzes.

70 g des so hergestellten Aminopolyanthrimidgemisches werden in eine Schmelze auf 70 g Aluminiumchlorid und 170 g Pyridin eingetragen und 2 Stunden bei 125 — 130° C gerührt. Dann rührt man die Schmelze in 1000 ml 10%ige Natronlauge ein, rührt noch 30 Minuten bei 60° C, saugt ab und wäscht das Produkt neutral. Nach dem Trocknen erhält man 60 g eines schwarzen Pulvers, das als Küpenfarbstoff zu sehr farbstarken, echten grauen Färbungen führt.

Mit anderen cyclischen organischen Stickstoffbasen wie Picolin, Lutidin oder Gemischen dieser Basen mit Pyridin werden ähnlich gute Ergebnisse erzielt.

Beispiel 2

70 g des nach Beispiel 1, Abs. 1 hergestellten Polyanthrimidgemisches werden in eine Schmelze aus 56 g Aluminiumchlorid und 200 g Pyridin eingetragen und 1 Stunde bei 120°C gerührt. Dann wird die Schmelze in 800 ml 12%ige Natronlauge eingerührt, 30 Minuten bei 60°C nachgerührt und das Produkt abgesaugt und neutral gewaschen. Nach dem Trocknen erhält man 58 g eines grauen Küpenfarbstoffes, der etwas röter färbt, als der im Beispiel 1 beschriebene.

Beispiel 3

91 g 1-Aminoanthrachinon werden in 405 g 96%iger Schwefelsäure gelöst und diese Lösung schnell in 372 ml Wasser eingerührt. Zu der auf 25°C abgekühlten Suspension gibt man im Abstand von je 2¹/₂ Stunden 3mal jeweils 56 g Kaliumperoxodisulfat und rührt noch 5 Stunden bei ca. 25°C nach. Die Gesamtrührzeit beträgt 10 Stunden. Das Aminopolyanthrimidgemisch wird abgesaugt, gewaschen und getrocknet. Man erhält 88 g entsprechend 97% des Einsatzes.

70 g des nach Absatz 1 hergestellten Polyanthrimidgemisches werden in eine Schmelze aus 210 g Aluminiumchlorid und 350 g Pyridin bei ca. 120°C eingetragen. Dann heizt man auf 135°C und rührt noch 3 Stunden bei dieser Temperatur. Dann wird die Schmelze in 2780 g (2500 ml) 10%ige Natronlauge eingeführt, 280 g (230 ml) 13%ige Chlorlauge zugefügt und noch 30 Minuten bei 60°C nachgerührt. Der Farbstoff wird abgesaugt, neutral gewaschen und getrocknet. Man erhält 59,5 g eines ähnlichen Farbstoffes wie der in Beispiel 1 beschriebene.

**Patentansprüche**

1. Verfahren zur Herstellung eines Anthrachinonküpenfarbstoffs durch Umsetzung von 1-Aminoanthrachinon in schwefelsaurem Medium mit oxidierend wirkenden Mitteln zu Aminopolyanthrimiden und Carbazolierung der Aminopolyanthrimide in Gegenwart eines tertiären organischen Amins mit AlCl₃, dadurch gekennzeichnet, daß man pro Gewichtsteil Aminopolyanthrimid etwa 0,5 bis etwa 3 Gewichtsteile AlCl₃ und etwa 2 bis etwa 6 Gewichtsteile eines tertiären organischen Amins einsetzt.

2. Verfahren gemäß Anspruch 1, dadurch gekennzeichnet, daß man 0,7 bis 1,5 Gewichtsteile AlCl₃ einsetzt.

3. Verfahren gemäß Anspruch 1, dadurch gekennzeichnet, daß man 0,8 bis 1 Gewichtsteil AlCl₃ einsetzt.

4. Verfahren gemäß den Ansprüchen 1—2, dadurch gekennzeichnet, daß man bei der Oxidation pro Gewichtsteil 1-Aminoanthrachinon 6—12 Gewichtsteile 30—50%ige Schwefelsäure verwendet.

5. Verfahren gemäß den Ansprüchen 1—2, dadurch gekennzeichnet, daß man bei der Oxidation pro Gewichtsteil 1-Aminoanthrachinon 8—10 Gewichtsteile 30—50%ige Schwefelsäure einsetzt.

6. Verfahren gemäß den Ansprüchen 1—4, dadurch gekennzeichnet, daß man bei Temperaturen zwischen etwa 100 und etwa 140°C carbazoliert.

7. Verfahren gemäß den Ansprüchen 1—4, dadurch gekennzeichnet, daß man bei 115—135°C carbazoliert.

8. Verfahren gemäß den Ansprüchen 1—6, dadurch gekennzeichnet, daß man in Gegenwart von Pyridin carbazoliert.

**Claims**

1. Process for preparing an anthraquinone vat dyestuff by reacting 1-aminoanthraquinone in a medium containing sulphuric acid with agents having an oxidising action to give aminopolyanthrimides and carbazolating the aminopolyanthrimides in the presence of a tertiary organic amine with AlCl₃, characterised in that, per part by weight of aminopolyanthrimide, about 0.5 to about 3 parts by weight of AlCl₃ and about 2 to about 6 parts by weight of a tertiary organic amine are used.

2. Process according to Claim 1, characterised in that 0.7 to 1.5 parts by weight of AlCl₃ are used.

3. Process according to Claim 1, characterised in that 0.8 to 1 part by weight of AlCl₃ is used.

4. Process according to Claims 1—2, characterised in that 6—12 parts by weight of 30—50% strength sulphuric acid are used in the oxidation per part by weight of 1-aminoanthraquinone.

5. Process according to Claims 1—2, characterised in that 8—10 parts by weight of 30—50% strength sulphuric acid are used in the oxidation per part by weight of 1-aminoanthraquinone.

6. Process according to Claims 1—4, characterised in that the carbazolation is carried out at temperatures between about 100 and about 140°C.

7. Process according to Claims 1—4, characterised in that the carbazolation is carried out at 115—135°C.

8. Process according to Claims 1—6, characterised in that the carbazolation is carried out in the presence of pyridine.

**Revendications**

1. Procédé pour la fabrication d'un colorant anthraquinonique pour cuve par réaction de la 1-aminoanthraquinone en milieu sulfurique avec des agents oxydants en aminopolyanthrimides et carbazolation des aminopolyanthrimides en présence d'une amine organique tertiaire avec AlCl₃, caractérisé en ce que l'on utilise environ 0,5 à environ 3 parties en poids de AlCl₃ et environ 2 à environ 6 parties en poids d'une amine organique tertiaire par partie en poids d'aminopolyanthrimide.

2. Procédé selon la revendication 1, caractérisé en ce que l'on utilise 0,7 à 1,5 partie en poids

de AlCl$_3$.

3. Procédé selon la revendication 1, caractérisé en ce que l'on utilise 0,8 à 1 partie en poids de AlCl$_3$.

4. Procédé selon les revendications 1—2, caractérisé en ce que l'on utilise dans l'oxydation 6—12 parties en poids d'acide sulfurique à 30—50% par partie en poids de 1-aminoanthraquinone.

5. Procédé selon les revendications 1—2, caractérisé en ce que l'on utilise dans l'oxydation 8—10 parties en poids d'acide sulfurique à 30—50% par partie en poids de 1-aminoanthraquinone.

6. Procédé selon les revendications 1—4, caractérisé en ce que l'on effectue la carbazolation à des températures entre environ 100°C et environ 140°C.

7. Procédé selon les revendications 1—4, caractérisé en ce que l'on effectue la carbazolation à des températures entre 115°C et environ 135°C.

8. Procédé selon les revendications 1—6, caractérisé en ce que l'on effectue la carbazolation en présence de pyridine.